# EUROPÄISCHE PATENTSCHRIFT

(11) **EP 1 062 455 B1**
(45) Veröffentlichungstag und Bekanntmachung des Hinweises auf die Patenterteilung: **06.02.2002**
(21) Anmeldenummer: 99914499.1
(22) Anmeldetag: 09.03.1999
(51) Int. Cl.: F16L 55/165

(54) **VERFAHREN ZUM VERLEGEN VON HOCHDRUCKFLUIDLEITUNGEN**
METHOD FOR LAYING PIPES FOR FLUID UNDER HIGH PRESSURE
PROCEDE POUR POSER DES CONDUITES POUR FLUIDES SOUS HAUTE PRESSION

(30) Priorität: 10.03.1998 DE 19810373
(43) Veröffentlichungstag der Anmeldung: 27.12.2000
(73) Patentinhaber: Rädlinger Maschinen- und Anlagenbau GmbH, 93413 Cham (DE); VNG- Verbundnetz Gas Aktiengesellschaft, 04347 Leipzig (DE)
(72) Erfinder: RÄDLINGER, Josef, jun, D-93413 Cham (DE); WEISS, Walter, D-93483 Pösing (DE); KÖPPING, Frank-Michael, D-04103 Leibzig (DE); HEINZE, Frank, 15711 Königs-Wusterhausen (DE)
(74) Vertreter: Winter, Brandl & Partner
(86) Internationale Anmeldenummer: EP9901526
(87) Internationale Veröffentlichungsnummer: WO9946533

(56) Entgegenhaltungen:
- EP-A- 0 370 108
- EP-A- 0 676 579

## Beschreibung

Die Erfindung betrifft ein Verfahren zum Verlegen von Hochdruckfluidleitungen, insbesondere von Gasleitungen, in bereits bestehende Altfluidleitungen.

Hochdruckfluidleitungen in Form von Gasleitungen durchziehen das ganze Land und sind nach Art eines Gitternetzes an vielen Punkten miteinander verbunden. Die einzelnen Gasleitungen zwischen Kopplungs- oder Abzweigungsstellen weisen zum Teil unterschiedliche Nenndruckstufen auf, so daß zwischen den einzelnen Rohrleitungen mit unterschiedlichen Nenndruckstufen ggfs. Druckminderer bzw. Verdichterstufen dazwischengeschaltet werden müssen. Dies verteuert derartige Anlagen natürlich und außerdem wird der Durchsatz von dem Rohrleitungsabschnitt mit der geringsten Nenndruckstufe begrenzt. Der Ausbau von Rohrleitungen mit unterschiedlichen Nenndruckstufen auf eine einheitliche höhere Nenndruckstufe ist vergleichsweise aufwendig, da hierzu die Rohrleitungsabschnitte mit einer zu niedrigen Nenndruckstufe vollständig neu verlegt werden müssen.

Zum Sanieren von Gasleitungen wird das sogenannte Gewebeschlauchrelining-Verfahren angewendet, wie es z. B. aus der DE-A-44 03 370 bekannt ist. Hierbei wird ein Gewebeschlauch - ein sogenannter Inliner - mit harzdurchtränkter Innenschicht umgestülpt in die zu sanierende Gasleitung eingebracht, so daß nunmehr die harzdurchtränkte Schicht außen liegt. Mittels Druckbeaufschlagung wird erreicht, daß die harzdurchtränkte Außenschicht mit der Innenseite der Altfluidleitung verklebt. Auf diese Weise werden sanierungsbedürftige Gasleitungen einer bestimmten Nenndruckstufe saniert, so daß die sanierte Gasleitung wieder die gleiche oder eine geringer Nenndruckstufe aufweist.

Aus der US-PS-5,205,886 ist ebenfalls ein Gewebeschlauchrelining-Verfahren bekannt, bei dem ein Inliner in eine bestehende Rohrleitung eingezogen wird. Der Inliner besteht aus mehreren Schichten mit einer zugund reißfesten Außenschicht aus Gewebe. Alle Schichten des Inliners sind elastisch und expandierbar, so daß der eingezogene Inliner mittels eines Fluids ausgedehnt und in engen Kontakt mit der Innenwand der Rohrleitung gebracht werden kann. Die Druckstabilität wird daher wesentlich von der Altfluidleitung bestimmt.

Es ist Aufgabe der vorliegenden Erfindung, ein Verfahren zum Verlegen von Hochdruckfluidleitungen anzugeben, das einfacher und preisgünstiger ist.

Die Lösung dieser Aufgabe erfolgt durch die Merkmale des Anspruchs 1.

Der Kern der Erfindung liegt darin, das an sich bekannte Verfahren zum Sanieren von Rohrleitungen mittels Gewebeschlauchrelining auch zum Erhöhen der Nenndruckstufe von noch intakten Hochdruckfluidleitungen zu nutzen. Damit können Hochdruckfluidleitungen auf höhere Nenndruckstufen ausgebaut werden, ohne daß hierzu die alte Fluidleitung ausgegraben werden muß.

Gemäß einer vorteilhaften Ausgestaltung ist der eingezogene Gewebeschlauch beschichtet, wobei die Art der Beschichtung entsprechend der in der Hochdruckfluidleitung geführten Gase und Flüssigkeiten, der verwendeten Drücke, etc. gewählt wird.

Gemäß einer weiteren vorteilhaften Ausgestaltung der Erfindung entspricht der Außendurchmesser des eingezogenen Gewebeschlauches in etwa dem Innendurchmesser der Altfluidleitung, so daß keinerlei Volumen verlorengeht. Wichtig ist hierbei, daß die Außenfluidleitung nicht den neuen Nenndruck aufnehmen muß also diesbezüglich keine Stützfunktion besitzen muß. Der neue höhere Nenndruck wird vollständig durch die Festigkeit des Gewebes bereitgestellt. Als Material für den Gewebeschlauch sind alle hochfesten Materialien und insbesondere Keflar geeignet.

Gemäß einer weiteren vorteilhaften Ausführungsform wird der Gewebeschlauch entsprechend dem Gewebeschlauchreliningverfahren in die Altfluidleitung eingebracht. Damit können die aus dem Gewebeschlauchrelining-Verfahren bekannten Vorrichtungen und Verfahren beim Verlegen von Hochdruckfluidleitungen gemäß der vorliegenden Erfindung genutzt werden.

Die übrigen Unteransprüche beziehen sich auf weitere vorteilhafte Ausgestaltungen der Erfindung.

Weitere Einzelheiten, Merkmale und Vorteile der Erfindung ergeben sich aus der Nachfolgenden Beschreibung einer bevorzugten Ausführungsform der Erfindung anhand der Zeichnung.

### Es zeigt:

Fig. 1 eine schematische Darstellung eines Gasnetzes mit verschiedenen Leitungsabschnitten, die unterschiedliche Nenndruckstufen aufweisen,
Fig. 2 eine schematische Darstellung miteinander verbundener Altfluidleitungen mit unterschiedlichen Altnenndruckstufen und eingezogenem Gewebeschlauch einer bestimmten höheren Nenndruckstufe, und
Fig. 3 eine schematische Darstellung miteinander verbundener Altfluidleitungen mit unterschiedlichen Altnenndruckstufen, unterschiedlichen Rohrdurchmessern und eingezogene Gewebeschläuchen einer bestimmten höheren Nenndruckstufe,

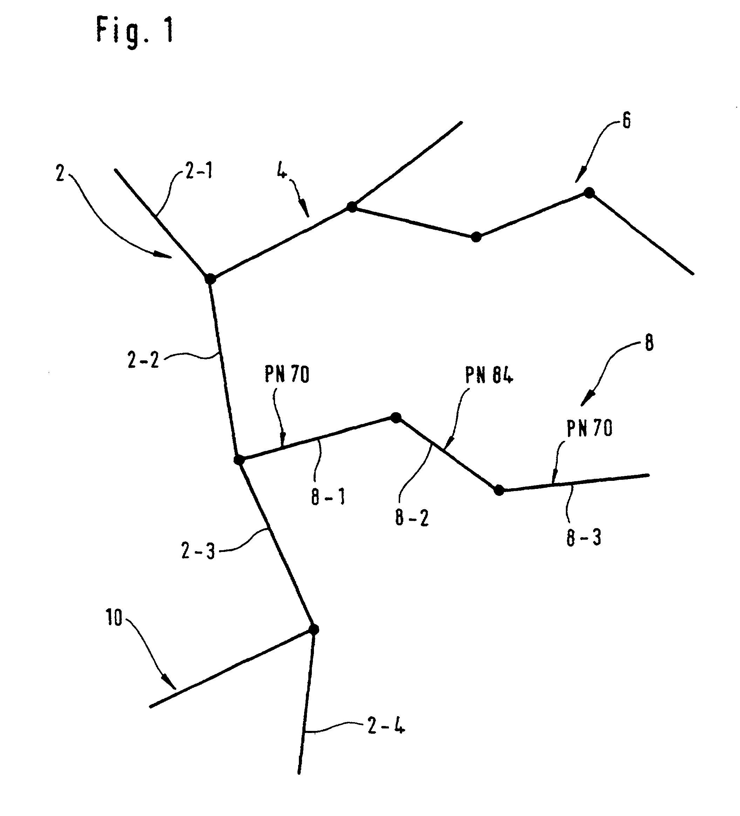

Fig. 1 zeigt ein Hochdruckgasleitungsnetz mit verschiedenen miteinander verbundenen Hochdruckgasleitungen 2, 4, 6, 8 und 10, die jeweils aus unterschiedlichen Hochdruckgasleitungsabschnitten 2-i usw. zusammengesetzt sind.

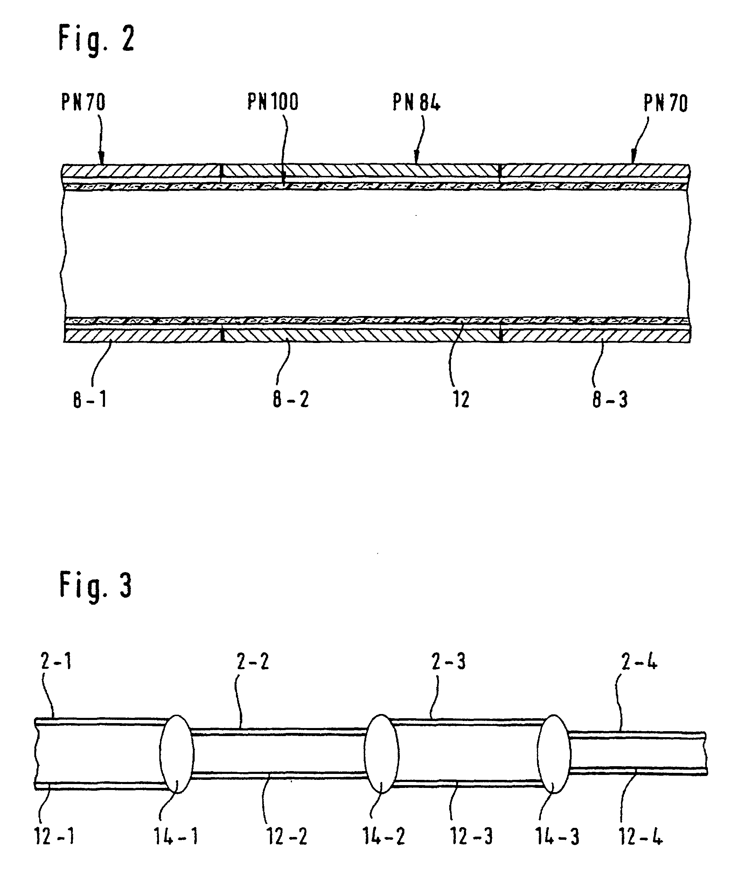

Fig. 2 zeigt schematisch der Gasleitung 8 mit den einzelnen miteinander verbundenen Abschnitten 8-1, 8-2 und 8-3, in die nach dem Inline-Verfahren ein Gewebeschlauch 12 eingezogen ist. Die einzelnen Leitungsabschnitte 8-1, 8-2 und 8-3 sind der Reihe nach auf Nenndruckstufen, Altnenndruckstufen, d.h. ohne eingezogenen Gewebeschlauch, von PN70, PN84 und PN70 ausgelegt. Durch einziehen eines Gewebeschlauches 12 mit einer Nenndruckstufe von PN100 wird aus der Hochdruckfluidleitung 8 mit den Druckstufen PN70, PN84 und PN70 eine Hochdruckleitung mit der einheitlichen höheren Nenndruckstufe von PN100.

Damit läßt sich der Gasdurchsatz wesentlich erhöhen und darüber hinaus kann die gesamte Leitung 8 als sogenannter Druckpuffer benutzt werden, d.h. als Speicher für Gas, um damit Spitzen im Gasverbrauch besser bedienen zu können.

Fig. 3 zeigt schematisch die Rohrleitung 2 aus Fig. 1, die neben Abzweigpunkten 14-1 bis 14-3 Rohrleitungsabschnitte 2-1 bis 2-4 mit unterschiedlichen Rohrduchmessern und unterschiedlichen Altnenndruckstufen aufweist. Auch in einem solchen Fall läßt sich mit den erfinderischen Verfahren eine Rohrleitung mit einheitlicher Nenndruckstufe, z.B. Nenndruckstufe 100, bereitstellen. Wegen der Abzweigungen 12-i ist es hier allerdings notwendig, unterschiedliche Gewebeschläuche 12-1, 12-2, 12-3 und 12-4 mit unterschiedlichen Nenndurchmessern einzuziehen. Prinzipiell wäre es zwar möglich, in eine Altrohrleitung mit einem bestimmten Durchmesser einen Gewebeschlauch mit einem kleineren Durchmesser einzuziehen, jedoch ist es vorzuziehen, den einzuziehenden neuen Gewebeschlauch 14 hinsichtlich seines Außendurchmessers an den Innendurchmessern der Altrohrleitung anzupassen, so daß kein Totvolumen entsteht.

### Bezugszeichenliste:

- 2: Hochdruckgasleitung
- 4: Hochdruckgasleitung
- 6: Hochdruckgasleitung
- 8: Hochdruckgasleitung
- 10: Hochdruckgasleitung
- 2-i: Hochdruckgasleitungsabschnitt
- 8-i: Hochdruckgasleitungsabschnitt
- 12-i: Gewebeschläuche
- 14-i: Abzweigpunkte

## Patentansprüche

1. Verfahren zum Verlegen von Hochdruckfluidleitungen (2, 4, 6, 8, 10) einer bestimmten Nenndruckstufe in eine bereits verlegte Altfluidleitung mit einer Altnenndruckstufe durch Einziehen eines gewebten Schlauches (12) der bestimmten Nenndruckstufe in die Altfluidleitung, **dadurch gekennzeichnet, daß** die bestimmte Nenndruckstufe des gewebten Schlauches höher ist als die Altnenndruckstufe der Altfluidleitungen.

2. Verfahren nach Anspruch 1, **dadurch gekennzeichnet, daß** der gewebte Schlauch (12) innen und/oder außen beschichtet ist.

3. Verfahren nach Anspruch 2, **dadurch gekennzeichnet, daß** die Beschichtung aus Kunststoff ist.

4. Verfahren nach einem der vorhergehenden Ansprüche, **dadurch gekennzeichnet, daß** der Außendurchmesser des gewebten Schlauches (12) im wesentlichen mit dem Innendurchmesser der Altfluidleitung (2, 8) übereinstimmt.

5. Verfahren nach einem der vorhergehenden Ansprüche, **dadurch gekennzeichnet, daß** der gewebte Schlauch (12) der bestimmten Nenndruckstufe nach dem Gewebeschlauchreliningverfahren in die Altfluidleitung (2, 8) eingezogen wird.

6. Verfahren zum Verlegen von Hochdruckfluidleitungen nach einem der vorhergehenden Ansprüche, **dadurch gekennzeichnet, daß** der gewebte Schlauch (12) mit der bestimmten Nenndruckstufe in eine Mehrzahl von miteinander verbundenen Altfluidleitungen (2-i, 8-i) mit unterschiedlichen Altnenndruckstufen eingezogen wird, wobei die bestimmte Nenndruckstufe des gewebten Schlauches höher ist als zumindest eine der unterschiedlichen Altnenndruckstufen der Altfluidleitungen.

## Claims

1. Process for the laying of high pressure fluid pipelines (2, 4, 6, 8, 10) of a given nominal pressure stage inside an already existing old fluid pipeline of an old nominal pressure stage by inserting a woven fabric hose (12) of the given nominal pressure stage into the old fluid pipeline, **characterised in that** the given nominal pressure stage of the woven fabric hose is higher than the old nominal pressure stage of the old fluid pipelines.

2. Process according to claim 1, **characterised in that** the woven fabric hose (12) is coated on the inside and/or outside.

3. Process according to claim 2, **characterised in that** the coating consists of plastic.

4. Process according to any one of the preceding claims, **characterised in that** the outer diameter of the woven fabric hose (12) substantially equals the inner diameter of the old fluid pipeline (2, 8).

5. Process according to any one of the preceding claims, **characterised in that** the woven fabric hose (12) of the given nominal pressure stage is inserted into the old fluid pipeline (2, 8) according to the woven fabric hose relining process.

6. Process for the laying of high pressure fluid pipelines according to any one of the preceding claims, **characterised in that** the woven fabric hose (12) of the given nominal pressure stage is inserted into a plurality of interconnected old fluid pipelines (2-i, 8-i) of different old nominal pressure stages, wherein the given nominal pressure stage of the woven fabric hose is higher than at least one of the different old nominal pressure stages of the old fluid pipelines.

## Revendications

1. Procédé d'installation de conduits de fluide de haute pression (2, 4, 6, 8, 10), d'un niveau de pression nominale donné, dans un conduit de fluide ancien, d'un niveau de pression nominale ancien, déjà en place par l'intégration d'un tuyau tissé (12) du niveau de pression nominale donné, **caractérisé en ce que** le niveau de pression nominale donné du tuyau tissé est supérieur à celui des conduits de fluide anciens..

2. Procédé selon la revendication 1, **caractérisé en ce que** le tuyau tissé (12) est enduit à l'intérieur et/ou à l'extérieur.

3. Procédé selon la revendication 2, **caractérisé en ce que** le revêtement est en matière plastique.

4. Procédé selon l'une des revendications précédentes, **caractérisé en ce que** le diamètre extérieur du tuyau tissé (12) correspond substantiellement au diamètre intérieur du conduit de fluide ancien (2, 8).

5. Procédé selon l'une des revendications précédentes, **caractérisé en ce que** le tuyau tissé (12) du niveau de pression nominale donné est installé dans le conduit de fluide ancien (2, 8) selon le procédé de relining de tuyaux tissé.

6. Procédé d'installation de conduits de fluide de haute pression selon l'une des revendications précédentes, **caractérisé en ce que** le tuyau tissé (12) du niveau de pression nominale donné est installé dans une multitude de conduits de fluide anciens reliés les uns aux autres (2-i, 8-i) et de différents niveaux de pression nominale anciens, le niveau de pression nominale donné du tuyau tissé étant supérieur à au moins un des différents niveaux de pression nominale anciens des conduits de fluide anciens.
